# EUROPÄISCHE PATENTSCHRIFT

(11) **EP 0 520 942 B1**
(45) Veröffentlichungstag und Bekanntmachung des Hinweises auf die Patenterteilung: **31.01.1996**
(21) Anmeldenummer: 92810426.4
(22) Anmeldetag: 03.06.1992
(51) Int. Cl.: B60B 3/04

(54) **Rad für ein Fahrrad**
Bicycle wheel
Roue pour bicyclette

(30) Priorität: 28.06.1991 CH 1918/91
(43) Veröffentlichungstag der Anmeldung: 30.12.1992
(73) Patentinhaber: KUTTER, Michael, CH-4051 Basel (CH)
(72) Erfinder: KUTTER, Michael, CH-4051 Basel (CH)
(74) Vertreter: Feldmann, Clarence Paul

(56) Entgegenhaltungen:
- GB-A- 146 178
- GB-A- 220 900
- US-A- 1 439 269

## Beschreibung

Die Erfindung betrifft ein Rad für ein Fahrrad mit Tret- oder Hilfsmotor-Antrieb, gemäß dem Obergriff des Anspruchs 1.

Eine Radkonstruktion mit Speichen, wie sie für Fahrräder und Motorfahrräder gebräuchlich ist, ist zwar sehr leicht, jedoch mit einigen Nachteilen behaftet:

Speichenräder sind in der Herstellung aufwendig, da jede Speiche einzeln montiert werden muss. Ferner sind im Fall von Beschädigung nur einer Komponente, das ganze Rad mit Nabe, Speichen und Felge auszuwechseln, was speziell bei Hinterräder unnötige Kosten sowie Materialverschwendung mit sich bringt. Die Abspannung der Speichen auf beide Seiten der Nabe ist relativ platzaufwendig und steht im Widerspruch zu der gebräuchlichen, Raum beanspruchenden Derailleur-Wechselschaltung mit immer mehr am Hinterrad montierten Zahnkränzen. Häufig verklemmt sich die Kette zwischen dem grössten Zahnkranz und den Speichen. Speichenräder haben ferner im Rennsport aerodynamische Nachteile, eine glatte Formgebung die vom Fahrtwind laminar umströmt wird, wäre wünschens- wert. Ferner stellen Speichenräder im Alltag für den Fahrer sowie für mitgeführte Kinder eine erhebliche Unfallgefahr dar. Brüche von Zehen, Fingern etc. sind die Folgen. Spei- chenräder sind mühsam zu reinigen.

Es sind Scheibenräder bekannt, die einige der besagten Nachteile beheben. Im Wesentlichen wird bei solchen Scheibenrädern die Abspannung der Felge nach beiden Seiten mittels Speichen durch 2 leicht konusförmige Scheiben ersetzt. Eine solche Konstruktion ist ebenso platzaufwendig wie diejenige eines Speichenrades und ist zudem sehr starr in Bezug auf Stösse.

Ferner ist der Herstellungsaufwand für solche Räder relativ gross. Da 2 Scheiben vom Innendurchmesser der Felge verwendet werden, kommen aus Gewichtsgründen nur sehr leichte, aber kostspielige Materialien in Frage, vor allem faserverstärkte Kunststoffe.

Aus GB 146 178 (Compagnie d'Applications Mecaniques) ist ein demontierbares Scheibenrad bekannt. Dabei besteht die Scheibe aus einem stabilen Blechteil mit veränderlicher Dicke und einer Form, welche eine formschlüssige Befestigung an einer bestimmten, dazu ausgestalteten Radnabe ermöglicht. Durch die variable Dicke und die Formgebung entsteht eine leichtes, aber in seiner Steifheit dem normalen Scheibenrad entsprechendes leicht demontierbares Rad.

Es war nun Aufgabe der Erfindung, eine Lösung zu finden, die die Nachteile der bekannten Konstruktionen vermeidet, insbesondere soll die Lösung eine Leichtbauweise und in ihrer Wirkung nicht starr und servicefreundlich sein.

Die erfindugsgemässe Lösung ist dadurch gekennzeichnet, dass die dünnwandige Radschüssel konisch oder sphärisch gewölbt, federelastisch ausgebildet und aus Blech oder aus faserverstärktem Kunststoff hergestellt, ist.

Im Unterschied zu bekannten Anwendungen von Scheibenrädern an Fahrrädern mit je 2 tragenden Scheiben pro Rad, weist das erfindugnsgemässe Rad nur eine tragende Scheibe auf. Ebenfalls im Gegensatz zu bekannten Scheibenrädern, deren 2 Scheiben eine den Speichenrädern ähnliche, hauptsächlich auf Zug beanspruchte Absapnnung der Felge zu beiden Seiten der Nabe hin ergeben, schlägt der erfindungsgemässe Radkörper nur eine tragende Abstützung vor.

Das ergibt obtisch sehr elegante Fahrräder, deren Radkörper ohne Demontage der Nabe und Antriebskette, demontiert werden können. Die einseitig abgestützten, erfindungsgemässen Räder bieten bei deutlich geringerem Platzbedarf und geringerem Herstellungsaufwand die gleichen aerodynamischen Vorteile wie bekannte, aus 2 Halbschalen aufgebaute Scheibenräder.
Ebenso ist jegliche Verletzungsgefahr, wie sie für Fahrer, sowie mitgeführte Kleinkinder bei Speichenrädern besteht, ausgeschlossen. Die nur einseitige tragfähige Schüsselform ergibt allein durch die Form bedingt schon eine leicht federnde und trotzdem stabile Wirkung.

Die neue Erfindung erlaubt nun eine ganze Reihe von besonders vorteilhaften Ausgestaltungsgedanken. So wird vorgeschlagen, die Radschüssel seitlich, dem Antrieb gegenüberliegend mit der Nabe zu verbinden. Ferner wird vorgeschlagen, die Radschüssel als konische oder spährische gewölbte Form und vorzugsweise leicht federnd auszubilden.

Die Herstellung von erfindungsgemässen Rädern ist relativ einfach. Sie können aus faserverstärkten Verbundwerkstoffen, zum Beispiel als "Sandwichkonstruktionen" oder zum Beispiel als Pressform in Blech hergestellt werden.

Der Radkörper kann in dem an der Nabe angrenzenden Bereich mit einem Flansch verstärkt werden, der fest mit der Radschüssel und lösbar mit der Nabe verbunden ist.

Ganz besondere Vorteile ergeben sich, wenn Reifen, Felge, Radschüssel und Flansch eine leicht demontierbare Einheit bilden. Wenn eine grosse Eigensteifigkeit für das ganze Rad gefordert ist, kann die Radschüssel im inneren Bereich sandwichförmig verstärkt werden, wobei der Sandwich vorzugsweise in den Flansch übergeführt ist. Weiterhin kann auf der der Radschüssel gegenüberliegenden Seite eine Schutzscheibe angeordnet werden, welche besonders dünnwandig ausgestaltet sein kann und einen kleineren Durchmesser als die Radschüssel aufweist. Bei einer anderen Ausgestaltung des Radkörpers (vor allem bei Verwendung von Metallblech) wird der Schüsselförmige Radkörper durch eine kleinere Stützscheibe verstärkt und zwischen Radkörper und Stützscheibe ein, mit der Nabe verbundenes Zwischenstück verwendet, das mit dem Flansch aus einem Stück bebildet sein kann.
Radkörper und Schutzscheibe werden im äusseren Bereich der Schutzscheibe direkt miteinander verbunden, derart, dass vorzugsweise durch Radköprer, Schutzscheibe und Zwischenstück ein im Querschnitt dreieckartiger Hohlraum entsteht, wobei das Zwischenstück vorzugswiese leicht von der Nabe demontierbar ist.

Ferner kann die Nabenabstützung einseitig an dem der Befestigung des Radkörpers gegenüberliegenden Ende der Nabe erfolgen wobei das Drehmoment des Antriebs auf das über die Nabenabstützunge verlängerte Ende der Nabe übertragen wird.

Bei einer weiteren bevorzugten Ausgestaltung kann in dem durch den schüsselförmigen Radkörper umschlossenden Raum ein mit dem Fahrzeugrahmen oder der Achse verbundener, zur Achse exzentrisch angeordneter Antriebsmotor untergebracht werden.

Radschüssel und/oder Schutzscheibe können ferner Lüftungsöffnungen aufweisen, die als verstärkende Radial-Rippen ausgebildet sein können.

Ein weiterer vorteilhafter Ausgestaltungsgedanke liegt darin, dass eine scheibenförmige Abdeckung vorgesehn wird, die den Hohlraum in dem der Motor untergebracht ist, mindestens teilseise abdeckt, wobei die Abdeckung gleichzeitig zur Uebertragung des Drehmomentes des Tretantriebes und/oder des Antriebmotores auf den Radkörper dient.

Die Erfindung wird nun an Hand einiger Ausführungsbeispiele mit weiteren Einzelheiten erläutert. Es zeigen:
**die Figur 1** ein Rad mit angebautem Hilfsmotor
**die Figur 2** ein Rad für Tretantrieb
**die Figur 3** ein Rad ohne Antrieb
**die Figur 4** ein Rad mit Schutzscheibe für den Antriebsmotor

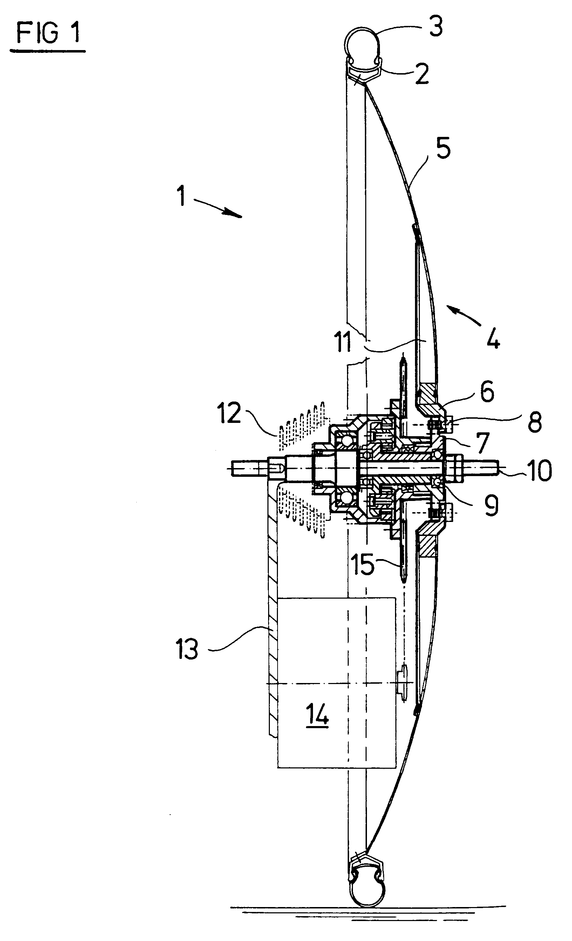

In der Folge wird nun auf die Figur 1 Bezug genommen. Ein Rad 1 weist eine Felge 2 mit Reifen 3 sowie einen Radkörper 4 auf. Der Radkörper 4 besteht aus einer Radschüssel 5 sowie einem Verstärkungsflansch 6, welcher über Schrauben 8 an einer Nabe 7 lösbar befestigt ist. Die Nabe 7 ist über eine Lagerung 9 drehbar auf einer Achse 10 gelagert. Die Radschüssel 5 weist bei dem Ausführunsbeispiel eine sphärisch bombierte Form auf und ist im inneren Teil mit einer Sandwich-Konstruktion 11 verstärkt.
Der Radkörper weist gegen die Radmitte hin über die Sandwichkonstruktion und den Verstärkungsflansch 6 eine zunehmende Steifigkeit, jedoch gegen aussen eine zunehmende Feder-Elastizität auf, sodass Form und Aufbau ein leicht federndes Verhalten für Schläge und auf das Rad ergeben. An der Nabe 7 ist ein Kettenradsatz 12 angeordnet, welcher in bekannter Weise mit einem Tretantrieb verbunden ist. Auf der Achse 10 kann aber auch über einen Stützarm 13 ein Hilfsmotor 14 befestigt werden, welcher über einen eigenen Kettenübertrieb 15, sowie ein in der Nabe untergebrachtes Stirnradgetriebe das Rad antreibt.

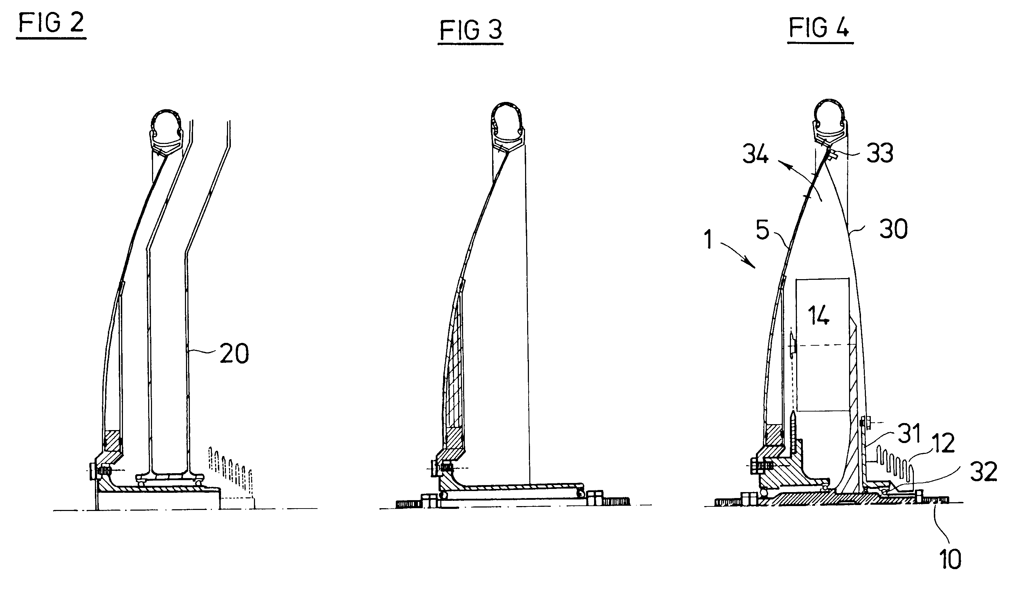

In der Figur 2 ist eine mittige Abstützung 20 für ein Rad mit Tretantrieb dargestellt.

Die Figur 3 zeigt ein nicht angetriebenes Rad mit einem erfindungsgemässen Radkörper.

Die Figur 4 entspricht antriebsmässig der Figur 1. Der durch die Radschüssel gebildete Hohlraum nimmt auch hier den Hilfs motor 14 auf, ist aber zum Schutz des motorischen Antriebes mit einer Schutzscheibe 30 geschlossen. Die Schutzscheibe 30 ist über ein Zwischenstück 31 sowie eine eigene Lagerung 32 gegenüber der Achse 10 drehbar gelagert. An dem Zwischenstück 31 ist direkt das Kettenrad 12 für den Tretantrieb befestigt, sodass hier das Drehmoment von dem Tretantrieb über die Schutzscheibe 30 auf das Rad 1 übertragen wird. In dieser Ausführung kann die Schutzscheibe, aus leichtfederndem Material hergestellt und, im äusseren Teil der Radschüssel 5 mit Schrauben 33 mit dem umlaufenden Rad 1 verbunden werden.Es können Lüftungsöffnungen entweder in der Radschüssel und/oder in der Schutzscheibe angebracht werden.

Der schüsselförmige Hohlraum kann anstatt für einen Hilfsmotor als kleiner Gepäckraum genutzt werden. Insbesondere ein elektrisch betriebener Hilfsmotor kann in der Nähe der Nabe untergebracht (kurze Transmission) und auf deren Welle abgestützt werden.

Die beim Fahrbetrieb mit einem Hilfsmotor auf dessen Abstützung wirkenden Kräfte sollten nicht auf den Rahmen des Fahrrades übertragen werden; er ist dafür zu schwach. Eine dirkete Abstützung des Motors auf die Welle der Nabe hat sich als die beste Lösung erwiesen. Eine solche Konstruktion wäre jedoch mit herkömmlichen Speichen- oder Scheibenrädern kaum zu realisieren.

Wird ein Elektromotor von sehr kurzer Bauweise verwendet, so kann dieser auf der Welle allein abgestützt werden. Sinnvollerweise wird dann die Nabe zwichen Radkörper und Abstützhebel liegend gelagert, während sich dieser Abstützhebel zwischen der Nabe und den Zahnkränzen des Tretantriebs befindet. Dadurch kann eine mit dem Rad mitrotierende Abdeckscheibe montiert werden, durch welche der Motor vor jeglichen Witterungseinflüssen geschützt ist. Handelt es sich bei dieser Anwendung eines Hilfsmotors um ein Hinterrad (mit Tretantrieb) so dient diese Abdeckscheibe zugleich zur Uebertragung des Drehmomentes des Trentantriebs auf den Radkörper. Die Figur entspricht dieser Anordnung. Der Hilfsmotor ist im Hohlraum der Radschüssel untergebracht jedoch durch die Schutzscheibe 30 vor Witterung geschützt.

Ist der verwendete Hilfsmotor zu lang für die obgenannte Konstruktion, so kann er elegant durch eine am Rahmen des Fahrrades befestigte Scheibe abgedeckt und vor Witterung geschützt werden. Eine aeshtetisch befriedigende Lösung bietet eine dem Radkörper ähnliche, zu diesem symmetrisch angeordnete Abdeckscheibe, die fest mit dem Rahmen verbunden ist, und die Kettenkränze des Tretantriebs teilweise ebenfalls abdeckt und Aussparungen für die Kette sowie den Kettenwechsler besitzt.

Das erfindungsgemässe Rad kann bei einem Fahrrad nur für das angetriebene Rad ganz besonders bevorzugt jedoch für beide Räder verwendet werden.

## Patentansprüche

1. Rad (1) für ein Fahrrad mit Tret- oder Hilfsmotor-Antrieb bestehend aus einer drehbar gelagerten Nabe (7), mit einer mitumlaufenden Felge (2) zur Aufnahme eines Reifens (3), sowie einem die Nabe (7) mit der Felge (2) verbindenden Radkörper (4), wobei der Radkörper (4) eine allein tragende dünnwandige Radschüssel (5) ist, **dadurch gekennzeichnet**, dass die dünnwandige Radschüssel (5) konisch oder sphärisch gewölbt, federelastisch ausgebildet und aus Blech oder aus faserverstärktem Kunststoff hergestellt, ist.

2. Rad nach Patentanspruch 1, dadurch gekennzeichnet, dass die Radschüssel (5) seitlich an der dem Antrieb gegenüberliegenden Seite, mit der Nabe (7) verbunden ist.

3. Rad nach Anspruch 2,dadurch gekennzeichnet, dass eine Nabenabstützung (20) einseitig an der Befestigung des Radkörpers (4) gegenüberliegenden Ende der Nabe (7) erfolgt

4. Rad nach Anspruch 2,dadurch gekennzeichnet, dass eine Nabenabstützung (20) mittig zwischen der Befestigung der dünnwandigen Radschüssel (5) und dem gegenüberliegenden Ende der Nabe (7) erfolgt.

5. Rad nach Patentanspruch 2, dadurch gekennzeichnet ,dass Reifen (3), Felge (2), Radschüssel (5) und Verstärkungsflansch (6) eine von der Nabe (7) demontierbare Einheit bilden

6. Rad nach Patentanspruch 2, dadurch gekennzeichnet, dass der Radkörper (4) eine der Radschüssel (5) gegenüberliegende Schutzscheibe (30) mit kleineren Durchmesser als die Radschüssel (5) aufweist.

7. Rad nach Anspruch 2, dadurch gekennzeichnet, dass in dem durch den Radköper (4) mit der dünnwandigen Radschüssel (5) umschlossenen Raum ein mit dem Fahrzeugrahmen oder der Achse (10)verbundener, zur Achse (10) exzentrisch angeordneter Antriebsmotor (14) untergebracht ist.

8. Rad nach Anspruch 7, dadurch gekennzeichnet, dass die Schutzscheibe (30) drehbar gelagert ist und zur Uebertragung des Drehmomentes des Tretantriebes und/oder des Antriebsmotors (14) auf den Radkörper dient.

9. Verwendung des Rades nach Anspruch 1, bei einem Fahrrad mit Tret- oder Hilfsmotor-Antrieb, dadurch gekennzeichnet, dass der Radkörper (4) sowohl des angetriebenen Rades wie auch des nicht-angetriebenen Rades eine allein tragende dünnwandige Radschüssel (5) aufweisen.

## Claims

1. A wheel (1) for a bicycle having a pedal-operated or auxiliary motor drive, comprising a hub (7) mounted in rotary manner and having a conjointly rotating rim (2) for receiving a tyre (3), as well as a wheel body (4) connecting the hub (7) to the rim (2), wherein the wheel body (4) is a self-supporting thin-walled wheel dish (5), characterised in that the thin-walled wheel dish (5) is conically or spherically curved, constructed in spring elastic manner and made from sheet metal or fibre-reinforced plastics material.

2. A wheel according to claim 1, characterised in that the wheel dish (5) is laterally connected to the hub (7) on the side opposite to the drive.

3. A wheel according to claim 2, characterised in that a hub support (20) is provided on one side on the end of the hub (7) opposite to the fastening of the wheel body (4).

4. A wheel according to claim 2, characterised in that a hub support (20) is provided concentrically between the fastening of the thin-walled wheel dish (5) and the opposite end of the hub (7).

5. A wheel according to claim 2, characterised in that the tyre (3), rim (2), wheel dish (5) and reinforcing flange (6) form a unit which can be dismantled from the hub (7).

6. A wheel according to claim 2, characterised in that the wheel body (4) has a protective disc (30) facing the wheel dish (5) and having a smaller diameter than the latter.

7. A wheel according to claim 2, characterised in that, in the space surrounded by the wheel body (4) having the thin-walled wheel dish (5), is housed a drive motor (14) arranged eccentrically to the spindle (10) and connected either with the latter or to the vehicle frame.

8. A wheel according to claim 7, characterised in that the protective disc (30) is mounted in rotary manner and is used for the transfer of the torque of the pedal-operated drive and/or the drive motor (14) to the wheel body.

9. The use of the wheel according to claim 1 in a bicycle with a pedal-operated or auxiliary motor drive, characterised in that the wheel body (4) of both the driven wheel and the non-driven wheel comprises a self-supporting thin-walled wheel dish (5).

## Revendications

1. Roue (1) pour bicyclette à entraînement par pédale ou par moteur auxiliaire, comprenant un moyeu (7) logé de manière rotative dans un roulement, une jante (2) tournant simultanément avec le moyeu et servant de support pour un pneu (3), ainsi qu'un corps de roue (4) reliant le moyeu (7) à la jante (2), ledit corps de roue (4) étant une coupelle de roue (5) autoportante à paroi mince, caractérisée en ce que la coupelle de roue (5) à paroi mince est de forme conique ou sphéroïdale, fabriquée en un matériau élastique, tel que tôle ou matière plastique renforcée par fibres.

2. Roue selon la revendication 1, caractérisée en ce que la coupelle de roue (5) est reliée latéralement au moyeu (7) du côté opposé au système d'entraînement.

3. Roue selon la revendication 2, caractérisée en ce qu'un appui de moyeu (20) est prévu unilatéralement à l'extrémité opposée à la fixation du corps de roue (4) sur le moyeu (7).

4. Roue selon la revendication 2, caractérisée en ce qu'un appui de moyeu (20) est prévu à mi-distance entre la fixation de la coupelle de roue (5) à paroi mince et l'extrémité opposée du moyeu (7).

5. Roue selon la revendication 2, caractérisée en ce que le pneu (3), la jante (2), la coupelle de roue (5) et la bride de renforcement (6) constituent un ensemble pouvant être démonté du moyeu (7).

6. Roue selon la revendication 2, caractérisée en ce que le corps de roue (4) comprend un disque de protection (30) situé en face de la coupelle de roue (5) et présentant un diamètre inférieur à celui de la coupelle de roue (5).

7. Roue selon la revendication 2, caractérisée en ce que l'espace entre le corps de roue (4) et la coupelle de roue (5) à paroi mince permet d'installer un moteur d'entraînement (14) relié au châssis du véhicule ou à l'axe (10) de manière à se trouver dans une position excentrique par rapport à l'axe (10).

8. Roue selon la revendication 7, caractérisée en ce que le disque de protection (30) est logé dans un roulement permettant de le tourner et en ce qu'il peut être utilisé pour transmettre le couple de rotation de l'entraînement par pédales et/ou par moteur d'entraînement (14) sur le corps de roue.

9. Utilisation de la roue selon la revendication 1 pour une bicyclette à entraînement par pédales ou par moteur auxiliaire, caractérisée en ce que le corps de roue (4) de la roue entraînée et celui de la roue non entraînée comprennent une coupelle de roue (5) autoportante à paroi mince.
